# EUROPEAN PATENT SPECIFICATION

(11) **EP 1 647 482 B1**
(45) Date of publication and mention of the grant of the patent: **07.05.2008**
(21) Application number: 05109573.5
(22) Date of filing: 14.10.2005
(51) Int. Cl.: B64D 1/02, B64G 1/64, F16B 1/00

(54) **Payload ejection system**
Nutzlastauswurfsystem
Système d'éjection d'une charge utile

(30) Priority: 18.10.2004 US 965727
(43) Date of publication of application: 19.04.2006
(73) Proprietor: AAI CORPORATION, Hunt Valley MD 21030 (US)
(72) Inventor: Landsberg, Gary Bryan, 17363, Stewartstown, PA (US)
(74) Representative: Brunner, Michael John

(56) References cited:
- FR-A- 2 768 401
- US-B1- 6 287 039

## Description

### BACKGROUND OF THE INVENTION

The invention relates to release mechanisms, more particularly to payload release mechanisms.

Known aircraft payload release mechanisms for bombs, missiles and other expendable stores release the payload using pyrotechnic bolts, servos, pneumatic pistons, electric motors or solenoids. Servos, electric motors, pneumatic pistons and solenoids are relatively heavy and often rely on a complex mechanical system of levers to release and eject the payload. Pyrotechnic bolts require a secondary mechanism to push the payload away from the aircraft. Such secondary mechanisms often include pneumatic pistons that require a high pressure supply tank on the aircraft.

US 6287039 describes a system for temporarily immobilising two bodies relative to each other. In particular, when placing satellites in orbit, it is necessary to immobilise certain elements during launch and to restore their freedom of movement when the satellite is in orbit.
[03a] FR 2768401 describes a device for extending and retracting solar panels on a satellite.

### SUMMARY OF THE INVENTION

A more simple and light weight payload ejection system is desirable from both reliability and cost standpoints.

According to a first aspect of the present invention there is provided a payload ejection system for ejecting a payload from a transport vehicle, the system comprising:
an ejector mechanism operable to apply an ejection force to the payload to urge the payload away from the transport vehicle, and
a release mechanism operable to release the payload from a restrained state by releasing the ejection force, the release mechanism comprising
a payload mounting bolt for holding the payload in the restrained state, and
an actuator that fractures the mounting bolt, the actuator comprising a shape memory alloy, and
an activator that transforms the shape memory alloy from a compressed state to an elongated state,
wherein the actuator fractures the mounting bolt as the shape memory alloy transforms into the elongated shape to release the ejection force of the ejector mechanism.

According to a second aspect of the present invention there is provided a method for ejecting a payload from a transport vehicle, the method comprising:
restraining the payload to the transport vehicle with a payload mounting bolt;
releasing the payload from the restrained state by fracturing the payload mounting bolt, the fracturing being accomplished by transforming a shape memory alloy from a compressed state to an elongated state; and
applying an ejection force to the payload to urge the payload away from the transport vehicle.

### BRIEF DESCRIPTION OF THE DRAWINGS

**[06]** Further advantages and details of the invention follow from the exemplary embodiments and are explained in the following with the aid of the Figures, in which:
Figure 1 is a front view of an example of a payload ejection system in accordance with the invention;
Figure 2 is a sectional side view along section line II-II of the system shown in Figure 1;
Figure 3 is an example of a payload mounting bolt in accordance with the invention;
Figure 4 shows an example of a payload ejection system in accordance with the invention in a compressed state;
Figure 5 shows the system of Figure 4 in a compressed state with safety pins removed; and
Figure 6 shows the system of Figure 4 in an extended state.

### DETAILED DESCRIPTION OF THE INVENTION

The invention will be described using the example of a payload ejection system mounted to an aircraft. The invention provides a payload ejection system that overcomes many of the problems associated with payload ejection systems currently in use. The system has two main components, an ejector mechanism and a payload release mechanism.

The ejector mechanism provides self-contained stored energy for ejecting the payload away from the aircraft carrying the payload. The payload release mechanism releases the energy stored in the ejector mechanism upon receiving a launch signal.

In the example shown in the drawings, the ejector mechanism uses two springs to store the energy needed to eject the payload from the aircraft. By using compressed springs, no ejector mechanism energy source (such as, for example, compressed air cylinders) is needed on the aircraft.

The payload release mechanism uses an actuator that fractures a payload mounting bolt so as to release the energy stored in the ejector mechanism (in this example, the springs). The actuator is an actuator that has a shape memory alloy and an activator that transforms the shape memory alloy from a compressed state to an elongated state. Such an actuator is used to fracture a payload mounting bolt at a weakened area of the bolt. The payload mounting bolt is designed to fracture under a force that is less than the force exerted by the shape memory aiioy when it is transformed fr om the compressed state to the elongated state. This provides a reliable system for releasing the energy stored in the ejector mechanism.

One way to transform the shape memory alloy in the actuator is to apply an electric current to the shape memory alloy to raise its temperature above its transformation temperature, thus causing the shape memory alloy to expand and fracture the payload mounting bolt.

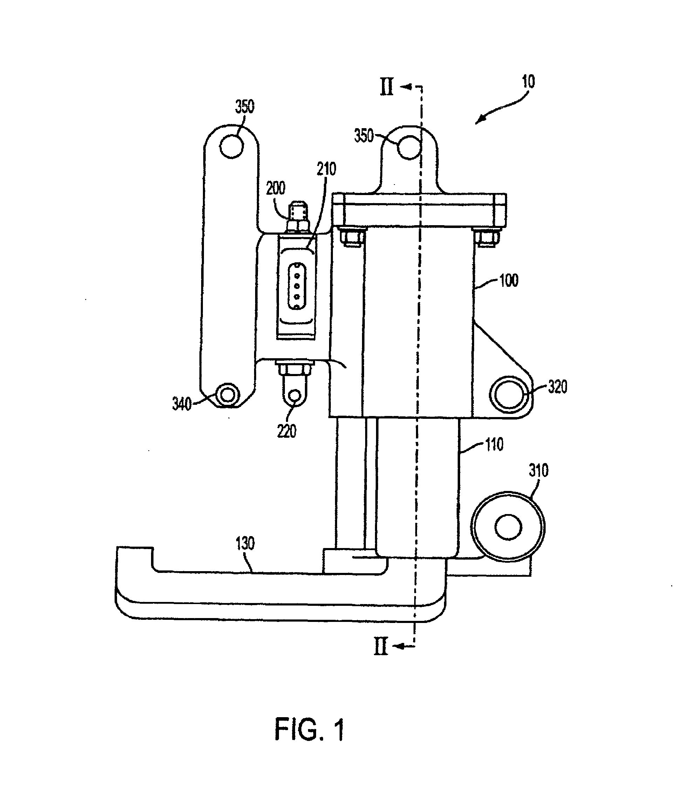

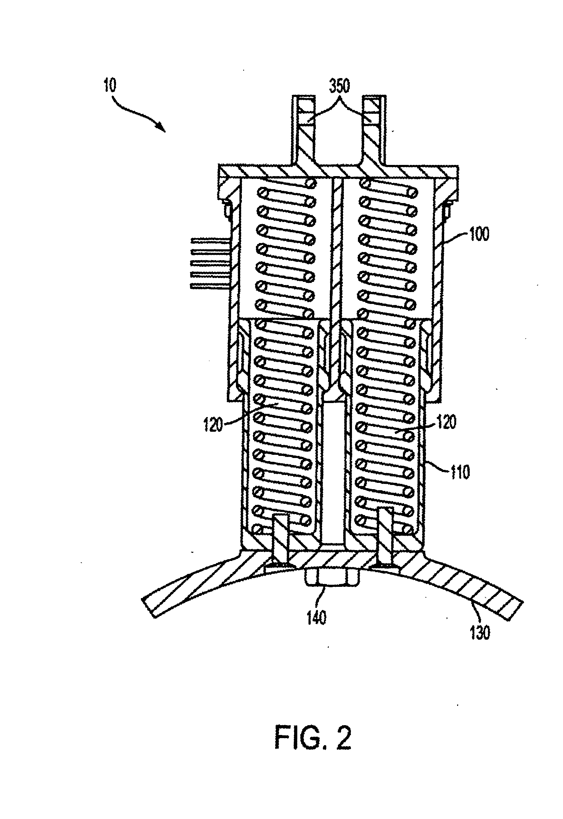

Figure 1 shows a payload ejection system 10 for use with an aircraft. Payload ejection system 10 has an outer housing 100 and an inner housing 110 that slide relatively to each other such that a payload interface support plate 130 that is attached to inner house 110 moves up and down in the Figure relative to outer housing 100. Figure 2 shows a cross section along section line II-11 in Figure 1. A pair of springs 120 that are housed inside outer housing 100 and inner housing 110 are shown in Figure 2. Springs 120 provide the energy necessary for ejecting the payload from the aircraft. Although two springs 120 ar e shown in this example, it is noted that any appropriate number of springs can be used as long as they provide sufficient force to eject the payload from the aircraft. A spring compression bolt 140 is provided for compressing springs 120 prior to attaching the payload to payload ejection system 10.

An ejector spring retention pin hole 310 is provided on inner housing 110 and an ejector spring retention pinhole 320 is provided on outer housing 100. Holes 310, 320 are aligned when springs 120 are compressed and inner housing 110 moves upward in the Figure relative to outer housing 100 such that an ejection spring retention pin 330 can be inserted through holes 310, 320 to hold inner housing 110 in the compressed position.

A payload mounting bolt 200 is provided with a payload attachment point 220 for attaching the payload to payload mounting bolt 200. An actuator 210 is provided for fracturing payload mounting bolt 200 to release the payload.

This example also shows a pre-launch secondary payload safety pin mo unt 340 and two aircraft interface attachment points 350 in outer housing 100. Pre -launch secondary payload safety pin mount 340 is used to attach the payload to outer housing 100 prior to launch to help ensure that the payload is not ejected before the aircraft takes off. A secondary payload safety pin (not shown) is removed from pre -launch secondary payload pin mount 340 prior to the aircraft taking off.

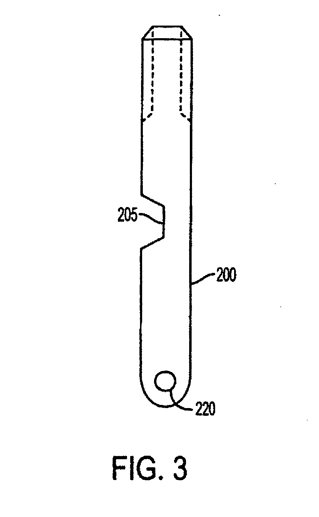

Figure 3 shows an example of payload mounting bolt 200 having a notch 205. Notch 205 is provided as a weakened point in payload mounting bolt 200 at which payload mounting bolt 200 will fracture when actuator 210 is activated and, for example, the shape memory alloy expands from the compressed state to the expanded state. While Figure 3 shows a notch in payload mounting bolt 200, it is noted that weakened areas of other shapes, materials or methods can also be used.

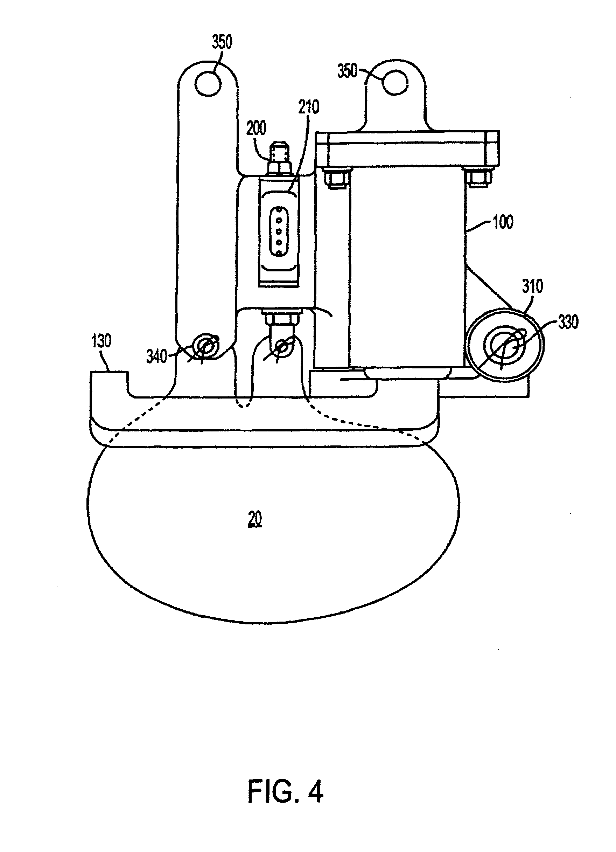

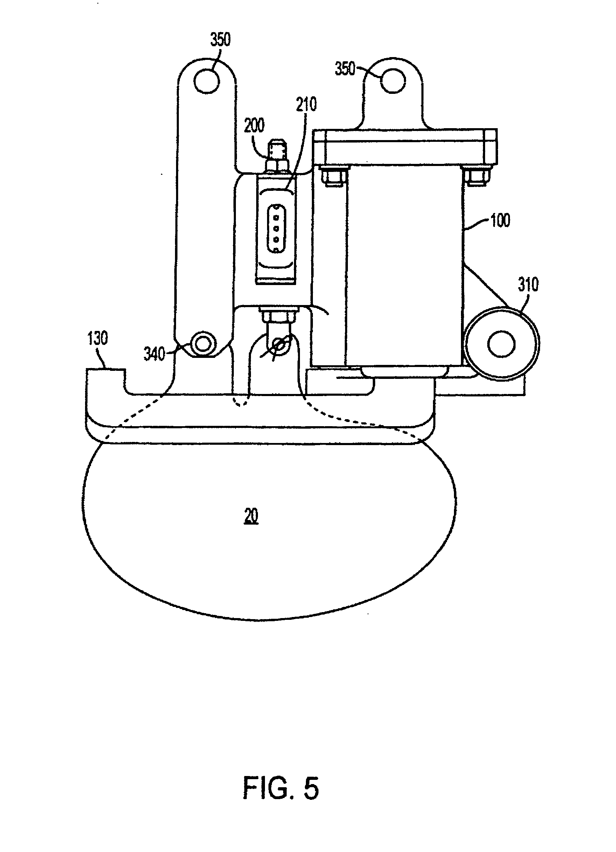

[017] Figures 4-6 show an example of use of the invention. Figure 4 shows payload ejection system 10 in the compressed state with ejector spring retention pin 330 and a secondary payload safety pin in place. This is an example of a configuration of the invention after the payload has been attached and immediately prior to the aircraft being ready for takeoff. Figure 5 shows payload ejection system 10 in the compressed state with ejector spring retention pin 330 and the secondary payload safety pin removed. In this state, only payload attachment point 220 and, therefore, payload mounting bolt 200, is holding springs 120 in the compressed state. At this point, the aircraft is ready for takeoff.

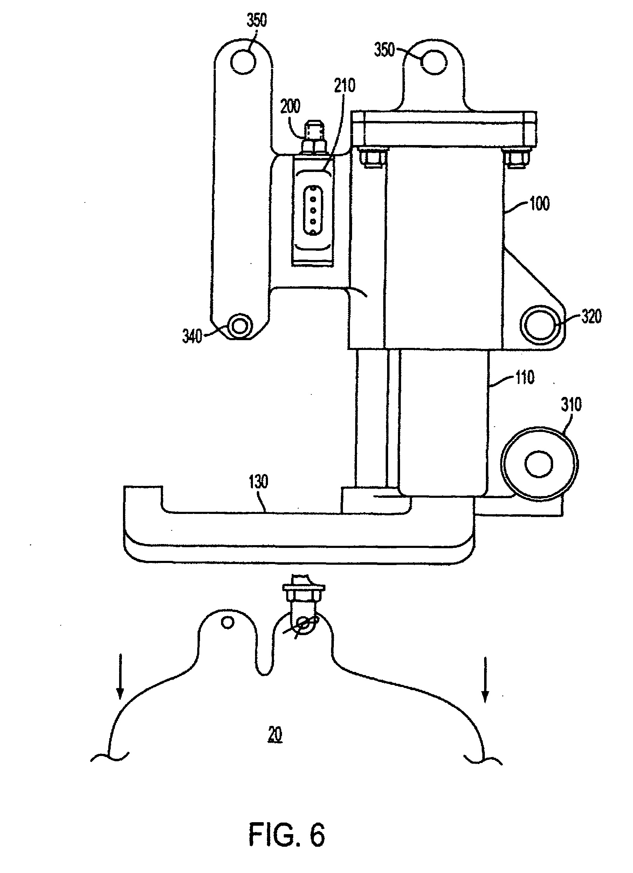

Figure 6 shows the payload ejection system 10 after actuator 210 has been activated and payload mounting bolt 200 has fractured. At this point, springs 120 are released and provide the ejection force necessary to push payload 20 away from the aircraft.

Upon landing of the aircraft, payload ejection system 10 can be reused by compressing actuator 210 to its compressed state (this can be done, for example, in an external press) or replacing actuator 210 with another actuator 210 that has previously been compressed into the compressed state. Also, a new payload mounting bolt 200 is provided. Next, spring compression bolt 140 is installed and turned to compress springs 120 so that ejector spring retention pinholes 310, 320 align and ejector spring retention pin 330 can be installed. After ejector spring retention pin 330 is installed, spring compression bolt 140 is removed and the payload is installed and attached to payload attachment point 220. At this point, a pre-launch secondary payload safety pin can be used to secure the payload to pre-launch secondary payload safety pin mount 340. At this point, the launch sequence described above can be repeated.

As can be seen from the above-description, payload mounting bolt 200 and a pin that attaches the payload to payload attachment point 220 are the only parts of payload ejection systems 10 that are not reused.

The invention is not limited to the above -described exemplary embodiments. It will be apparent, based on this disclosure, to one of ordinary skill in the art that many changes and modifications can be made to the invention without departing from the scope of the claims.

## Claims

1. A payload ejection system (10) for ejecting a payload from a transport vehicle, the system comprising:
an ejector mechanism (120) operable to apply an ejection force to the payload to urge the payload away from the transport vehicle; and
a release mechanism operable to release the payload from a restrained state by releasing the ejection force, the release mechanism comprising
a payload mounting bolt (200) for holding the payload in the restrained state, and
an actuator (210) that fractures the mounting bolt, the actuator comprising a shape memory alloy, and
an activator that transforms the shape memory alloy from a compressed state to an elongated state,
wherein the actuator (210) fractures the mounting bolt as the shape memory alloy transforms into the elongated shape to release the ejection force of the ejector mechanism.

2. The system (10) of claim 1, wherein the activator transforms the shape memory alloy from the compressed state to the elongated shape by heating the shape memory alloy.

3. The system (10) of claim 2, wherein the shape memory alloy is compressible from the elongated state to the compressed state and is reusable after it is compressed from the elongated state to the compressed state.

4. The system (10) of claim 3, wherein the mounting bolt (200) comprises a weakened area (205) for fracturing when the activator transforms the shape memory alloy from the compressed state to the elongated state.

5. The system (10) of claim 4, wherein the weakened area (205) is a notch.

6. The system (10) of claim 5, wherein the ejector mechanism comprises a spring (120) for supplying the ejection force.

7. The system (10) of claim 6, further comprising an ejection spring retention pin (330) for holding the spring (120) in a compressed state.

8. The system (10) of claim 7, further comprising a spring compression bolt (140) for compressing the spring (120) into the compressed state.

9. The system (10) of claim 1, wherein the shape memory alloy is compressible from the elongated state to the compressed state and is reusable after it is compressed from the elongated state to the compressed state.

10. The system (10) of claim 1, wherein the mounting bolt(200) comprises a weakened area (205) for fracturing when the activator transforms the shape memory alloy from the compressed state to the elongated state.

11. The system (10) of claim 10, wherein the weakened area (205) is a notch.

12. The system (10) of claim 1, wherein the payload ejection system is operable to detach the payload from the transport vehicle.

13. A method for ejecting a payload from a transport vehicle, the method comprising:
restraining the payload to the transport vehicle with a payload mounting bolt (200);
releasing the payload from the restrained state by fracturing the payload mounting bolt (200), the fracturing being accomplished by transforming a shape memory alloy from a compressed state to an elongated state; and
applying an ejection force to the payload to urge the payload away from the transport vehicle.

14. The method of claim 13, wherein the shape memory alloy is transformed from the compressed state to the elongated shape by heating the shape memory alloy.

15. The method of claim 14, wherein the shape memory alloy is compressed from the elongated state to the compressed state and is reusable after it is compressed from the elongated state to the compressed state.

16. The method of claim 15, wherein the mounting bolt (200) is fractured at a weakened area (205) formed for fracturing when the shape memory alloy is transformed from the compressed state to the elongated state.

17. The method of claim 16, wherein the mounting bolt (200) is fractured at a notch (205),

18. The method of claim 17, wherein the ejection force is supplied by a spring (120).

19. The method of claim 18, further comprising holding the spring (120) in a compressed state with an ejection spring retention pin (330).

20. The method of claim 19, further comprising compressing the spring (120) into the compressed state with a spring compression bolt (140).

## Patentansprüche

1. Sprengladungsausstoßsystem (10) zum Ausstoßen einer Sprengladung aus einem Transportfahrzeug, wobei das System Folgendes umfasst:
einen Ausstoßmechanismus (120), der betätigt werden kann, um eine Ausstoßkraft auf eine Sprengladung auszuüben, um die Sprengladung vom Transportfahrzeug weg zu drängen; und
einen Lösemechanismus, der betätigt werden kann, um die Sprengladung aus einem zurückgehaltenen Zustand freizusetzen, indem die Ausstoßkraft freigesetzt wird, wobei der Lösemechanismus Folgendes umfasst:
einen Sprengladungsbefestigungsbolzen (200) zum Halten der Sprengladung in dem zurückgehaltenen Zustand, und
einen Antrieb (210) der den Befestigungsbolzen zerbricht, wobei der Antrieb eine Formgedächtnislegierung umfasst, und
einen Auslöser, der die Formgedächtnislegierung aus einem komprimierten in einen dekomprimierten Zustand überführt,
wobei der Antrieb (210) den Befestigungsbolzen zerbricht, wenn die Formgedächtnislegierung in den dekomprimierten Zustand überführt wird, um die Ausstoßkraft des Lösemechanismus freizusetzen.

2. Das System (10) nach Anspruch 1, bei dem der Auslöser die Formgedächtnislegierung aus dem komprimierten Zustand in den dekomprimierten Zustand überführt, indem die Formgedächtnislegierung erwärmt wird.

3. Das System (10) nach Anspruch 2, bei dem die Formgedächtnislegierung aus dem dekomprimierten Zustand in den komprimierten Zustand komprimierbar ist und wieder verwendet werden kann, nachdem sie aus dem dekomprimierten Zustand in den komprimierten Zustand komprimiert worden ist.

4. Das System (10) nach Anspruch 3, bei dem der Befestigungsbolzen (200) einen geschwächten Bereich (205) zum Brechen umfasst, wenn der Auslöser die Formgedächtnislegierung aus dem komprimierten Zustand in den dekomprimierten Zustand überführt.

5. Das System (10) nach Anspruch 4, bei dem der geschwächte Bereich (205) eine Kerbe ist.

6. Das System (10) nach Anspruch 5, bei den der Ausstoßmechanismus eine Feder (120) umfasst, um die Ausstoßkraft zu liefern.

7. Das System (10) nach Anspruch 6, das des weiteren einem Ausstoßfederzurückhaltestift (330) umfasst, um die Feder (120) in einem komprimierten Zustand zu halten.

8. Das System (10) nach Anspruch 7, das des weiteren einen Federkompressionsbolzen (140) umfasst, um die Feder (120) in den komprimierten Zustand zu komprimieren.

9. Das System (10) nach Anspruch 1, bei dem die Formgedächtnislegierung aus dem dekomprimierten Zustand in den komprimierten Zustand komprimierbar ist und wieder verwendet werden kann, nachdem sie aus dem dekomprimierten Zustand in den komprimierten Zustand komprimiert worden ist.

10. Das System (10) nach Anspruch 1, bei dem der Befestigungsbolzen (200) einen geschwächten Bereich (205) zum Brechen umfasst, wenn der Auslöser die Formgedächtnislegierung aus dem komprimierten Zustand in den dekomprimierten Zustand überführt.

11. Das System (10) nach Anspruch 10, bei dem der geschwächte Bereich (205) eine Kerbe ist.

12. Das System (10) nach Anspruch 1, bei dem das Sprengladungsausstoßsystem betätigt werden kann, um die Sprengladung von dem Transportfahrzeug zu trennen.

13. Verfahren zum Ausstoßen einer Sprengladung aus einem Transportfahrzeug, wobei das Verfahren Folgendes umfasst:
Zurückhalten der Sprengladung auf dem Transportfahrzeug mit einem Sprengladungsbefestigungsbolzen (200);
Freisetzen der Sprengladung aus dem zurückgehaltenen Zustand durch Brechen des Sprengladungsbefestigungsbolzens (200), wobei das Brechen durch das Überführung einer Formgedächtnislegierung aus einem komprimierten in einen dekomprimierten Zustand erreicht wird; und
Anwenden einer Ausstoßkraft auf die Sprengladung, um die Sprengladung von dem Transportfahrzeug weg zu drängen.

14. Das Verfahren nach Anspruch 13, bei dem die Formgedächtnislegierung durch Erwärmen der Formgedächtnislegierung aus dem komprimierten in den dekomprimierten Zustand überführt wird.

15. Das Verfahren nach Anspruch 14, bei dem die Formgedächtnislegierung aus dem dekomprimierten in den komprimierten Zustand komprimiert wird und wieder verwendet werden kann, nachdem sie aus dem dekomprimierten Zustand in den komprimierten Zustand komprimiert worden ist.

16. Das Verfahren nach Anspruch 15, bei dem der Befestigungsbolzen (200) in einem geschwächten Bereich (205) zerbrochen wird, der ausgebildet ist, um zu zerbrechen, wenn die Formgedächtnislegierung aus dem komprimierten in den dekomprimierten Zustand überführt wird.

17. Das Verfahren nach Anspruch 16, bei dem der Befestigungsbolzen (200) an einer Kerbe (205) zerbrochen wird.

18. Das Verfahren nach Anspruch 17, bei dem die Ausstoßkraft durch eine Feder (120) zugeführt wird.

19. Das Verfahren nach Anspruch 18, weiterhin umfassend, dass die Feder (120) mit einem Ausstoßfederrückhaltestift (330) in einem komprimierten Zustand gehalten wird.

20. Das Verfahren nach Anspruch 19, weiterhin umfassend, dass die Feder (120) mit einem Federkompressionsbolzen (140) in den komprimierten Zustand komprimiert wird.

## Revendications

1. Système d'éjection (10) de charge utile, pour éjecter une charge utile d'un véhicule de transport, le système comprenant:
un mécanisme éjecteur (120) servant à appliquer une force d'éjection sur la charge utile, pour pousser la charge utile à l'écart du véhicule de transport; et
un mécanisme de désaccouplement servant à dégager la charge utile d'un état fixé, en libérant la force d'éjection, le mécanisme de désaccouplement comprenant
un boulon (200) de montage de la charge utile, pour maintenir la charge utile dans l'état fixé, et
un actionneur (210) qui rompt le boulon de montage, l'actionneur comprenant un alliage à mémoire de forme, et
un activateur qui transforme l'alliage à mémoire de forme, d'un état comprimé à un état allongé,
dans lequel l'actionneur (210) rompt le boulon de montage lorsque l'alliage à mémoire de forme se transforme jusque dans la forme allongée, pour libérer la force d'éjection du mécanisme éjecteur.

2. Système (10) selon la revendication 1, dans lequel l'activateur transforme l'alliage à mémoire de forme, de l'état comprimé à la forme allongée, par chauffage de l'alliage à mémoire de forme.

3. Système (10) selon la revendication 2, dans lequel l'alliage à mémoire de forme peut être comprimé, de l'état allongé à l'état comprimé, et est réutilisable après avoir été comprimé de l'état allongé à l'état comprimé.

4. Système (10) selon la revendication 3, dans lequel le boulon de montage (200) comprend une zone affaiblie (205) destinée à se rompre lorsque l'activateur transforme l'alliage à mémoire de forme de l'état comprimé à l'état allongé.

5. Système (10) selon la revendication 4, dans lequel la zone affaiblie (205) est une encoche.

6. Système (10) selon la revendication 5, dans lequel le mécanisme éjecteur comprend un ressort (120) pour fournir la force d'éjection.

7. Système (10) selon la revendication 6, comprenant en outre une goupille (330) de retenue du ressort d'éjection, pour maintenir le ressort (120) dans un état comprimé.

8. Système (10) selon la revendication 7, comprenant en outre un boulon (140) de compression du ressort, pour comprimer le ressort (120) jusque dans l'état comprimé.

9. Système (10) selon la revendication 1, dans lequel l'alliage à mémoire de forme peut être comprimé de l'état allongé à l'état comprimé, et est réutilisable après avoir été comprimé de l'état allongé à l'état comprimé.

10. Système (10) selon la revendication 1, dans lequel le boulon de montage (200) comprend une zone affaiblie (205) destinée à se rompre lorsque l'activateur transforme l'alliage à mémoire de forme de l'état comprimé à l'état allongé.

11. Système (10) selon la revendication 10, dans lequel la zone affaiblie (205) est une encoche.

12. Système (10) selon la revendication 1, dans lequel le système d'éjection de charge utile sert à détacher la charge utile du véhicule de transport.

13. Procédé d'éjection d'une charge utile d'un véhicule de transport, le procédé comprenant les étapes consistant à:
fixer la charge utile sur le véhicule de transport à l'aide d'un boulon de montage (200) de charge utile,
dégager la charge utile de l'état fixé en rompant le boulon de montage (200) de charge utile, la rupture étant produite en transformant un alliage à mémoire de forme d'un état comprimé à un état allongé, et
appliquer une force d'éjection sur la charge utile, pour pousser la charge utile à l'écart du véhicule de transport.

14. Procédé selon la revendication 13, dans lequel l'alliage à mémoire de forme est transformé de l'état comprimé à la forme allongée, par chauffage de l'alliage à mémoire de forme.

15. Procédé selon la revendication 14, dans lequel l'alliage à mémoire de forme est comprimé de l'état allongé à l'état comprimé et est réutilisable après avoir été comprimé de l'état allongé à l'état comprimé.

16. Procédé selon la revendication 15, dans lequel le boulon de montage (200) est rompu dans une zone affaiblie (205) formée pour se rompre lorsque l'alliage à mémoire de forme est transformé de l'état comprimé à l'état allongé.

17. Procédé selon la revendication 16, dans lequel le boulon de montage (200) est rompu à l'endroit d'une encoche (205).

18. Procédé selon la revendication 17, dans lequel la force d'éjection est fournie par un ressort (120).

19. Procédé selon la revendication 18, comprenant en outre l'étape consistant à maintenir le ressort (120) dans un état comprimé à l'aide d'une goupille (330) de retenue du ressort d'éjection.

20. Procédé selon la revendication 19, comprenant en outre l'étape consistant à comprimer le ressort (120) jusque dans l'état comprimé à l'aide d'un boulon (140) de compression du ressort.
